# DEMANDE DE BREVET EUROPEEN

(11) **EP 0 768 115 A1**
(43) Date de publication de la demande: **16.04.1997**
(21) Numéro de dépôt: 96490037.7
(22) Date de dépôt: 07.10.1996
(51) Int. Cl.: B01F 7/24, B01F 15/00, B01F 7/22, B01J 19/18

(54) **Dispositif de brassage d'une substance**

(30) Priorité: 10.10.1995 FR 9512105
(71) Demandeur: International Mixing Technologies, Sarl, 59240 Dunkerque (FR)
(72) Inventeur: Grainal, Freddy, 59240 Dunkerque (FR)
(74) Mandataire: Ecrepont, Robert

(57) **Abrégé**

L'invention se rapporte à un dispositif (1) de brassage d'une substance (2) comprenant :
- une enceinte (3),
- axialement disposé dans la cavité (3) de cette enceinte, un conduit (4) tubulaire,
- au moins une conduite (7) d'admission d'une substance (2) dans la cavité (3C),
- un organe (10) rotatif de mise en circulation de la substance (2) contenue dans le conduit (4),
- une conduite (8) destinée à l'extraction de la substance (2) de l'enceinte (3),
ce dispositif étant **caractérisé** en ce que le moyen (11) de guidage en rotation de l'arbre (9) porteur de l'organe (10) rotatif est situé du coté de celle (3A) des extrémités (3A, 3B) de l'enceinte (3) au niveau de laquelle s'effectue le passage de la substance (2) d'un canal (5) tubulaire dans un canal (6) annulaire de l'enceinte.

## Description

L'invention se rapporte à un dispositif de brassage d'une substance, ce dispositif étant connu sous la dénomination de réacteur à boucle.

L'invention concerne des particularités de construction du dispositif précité.

Les dispositifs du type précité comprennent essentiellement :
- une enceinte tubulaire de révolution qui définit une cavité cylindrique d'axe longitudinal, délimitée par des faces extrêmes opposées et une face latérale,
- axialement disposé dans la cavité, un conduit tubulaire de révolution dont la face externe, de diamètre externe et longueur moindres que ladite cavité, définit un canal axial et un canal annulaire qui communiquent par leurs extrémités communes,
- au moins une conduite dite d'admission, destinée à l'introduction de la substance dans la cavité,
- un organe rotatif de mise en circulation de la substance contenue dans le conduit tubulaire, de manière à, d'une part, par une extrémité dudit conduit tubulaire, la chasser dans le canal annulaire et, d'autre part, par l'autre extrémité dudit conduit tubulaire, l'aspirer dans ce canal annulaire, et par cela assurer la circulation "en boucle" et le brassage recherché pour la substance,
- au moins une conduite destinée à l'extraction de la substance dans la cavité et disposée pour engendrer le prélèvement de ladite substance, dans le canal annulaire, sensiblement au niveau de la face externe du conduit tubulaire et dans un plan déterminé situé entre les extrémités de ce conduit.

Les dispositifs existants à cet effet ont leurs avantages, mais l'invention vise, notamment, à améliorer leurs performances.

Particulièrement, un résultat que l'invention vise à obtenir est un dispositif de brassage du type précité dont la capacité de recirculation "en boucle" est accrue.

Un autre résultat que l'invention vise à obtenir est un dispositif de brassage qui permet :
- de brasser une substance avec une énergie ajustable (c'est à dire, en termes de métier, obtenir un "mélange doux" ou à l'opposé un "mélange intense"),
- de mélanger des produits gazeux avec des produits liquides (c'est à dire, en termes de métier, "mousser", "foisonner"),
- de produire des émulsions.

D'autres résultats que l'invention vise à obtenir seront annoncés dans la description qui suit.

L'invention a pour objet un dispositif de brassage de substances du type précité dont l'organe rotatif de mise en circulation est, à l'une de ses extrémités, solidaire d'un arbre porteur qui, par des moyens, est guidé et mu en rotation selon un axe sensiblement confondu avec celui du conduit tubulaire, ce dispositif étant notamment caractérisé en ce que le moyen de guidage en rotation de l'arbre porteur est situé du coté de celle des extrémités de l'enceinte au niveau de laquelle s'effectue le passage de la substance du canal tubulaire dans le canal annulaire.

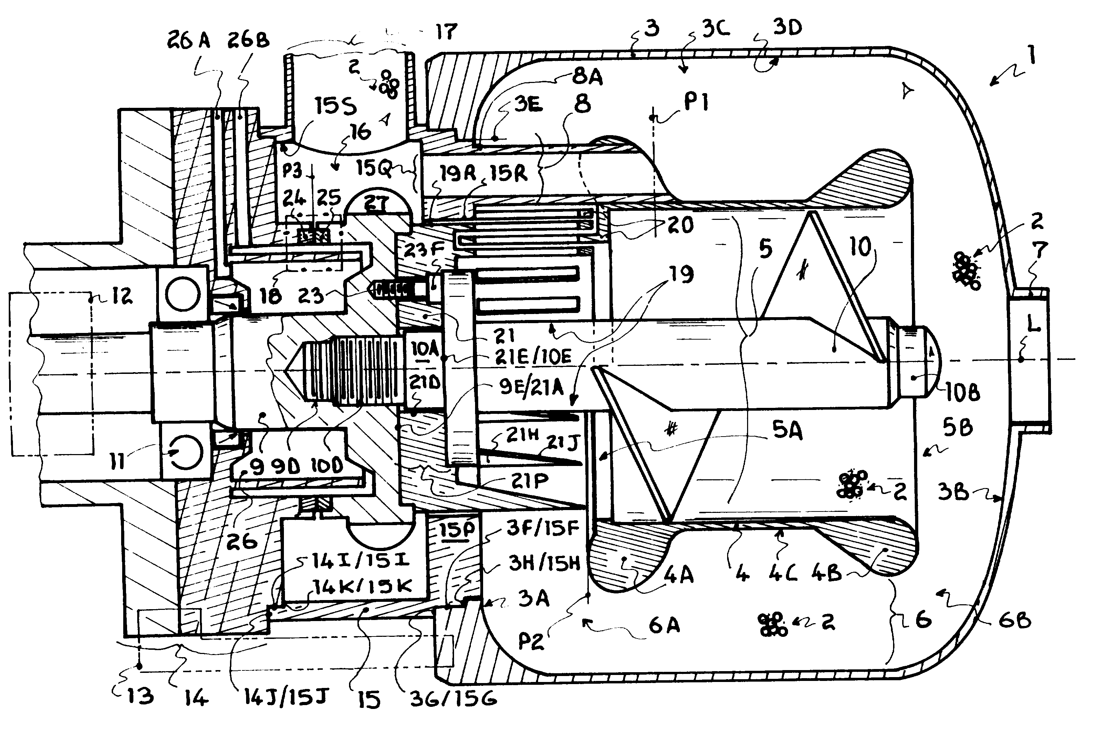

L'invention sera bien comprise à l'aide de la description ci-après faite à titre d'exemple non limitatif en regard du dessin ci-annexé qui représente schématiquement une vue en coupe du dispositif dans un plan longitudinal.

En se reportant au dessin on voit un dispositif 1 de brassage d'une substance 2 (partiellement représentée), notamment, en vue de son malaxage.

Le dispositif 1 comprend essentiellement :
- une enceinte 3 tubulaire de révolution qui définit une cavité 3C cylindrique, d'axe longitudinal L, délimitée par des faces extrêmes 3A, 3B opposées et une face latérale 3D de longueur et de diamètre déterminés,
- axialement disposé dans la cavité 3, un conduit 4 tubulaire de révolution dont la paroi 4, de diamètre externe et longueur moindres que celles de la face 3D latérale de cavité 3C, définit un canal 5 axial et un canal 6 annulaire qui communiquent par leurs extrémités communes 5A, 6A et 5B, 6B,
- au moins une conduite 7 dite d'admission, destinée à l'introduction de la substance 2 dans la cavité 3C,
- un organe 10 rotatif de mise en circulation de la substance 2 contenue dans le conduit 4 tubulaire, de manière à, d'une part, par une extrémité 4A dudit conduit 4 tubulaire, la chasser dans le canal 6 annulaire et, d'autre part, par l'autre extrémité 4B dudit conduit 4 tubulaire, l'aspirer dans ce canal 6 annulaire, et par cela assurer la circulation "en boucle" et le brassage recherché pour la substance 2,
- au moins une conduite 8 destinée à l'extraction de la substance de l'enceinte 3 et disposée pour engendrer le prélèvement de ladite substance 2, dans le canal 6 annulaire, sensiblement au niveau de la face 4C externe du conduit 4 tubulaire et dans un plan P1 déterminé situé entre les extrémités 4A, 4B de ce conduit.

Sur le dessin, les dimensions longitudinales de l'enceinte 3, du conduit 4 tubulaire et de l'organe 10 rotatif ont été notablement réduites.

L'homme de l'art est à même de déterminer la position du plan P1 de prélèvement de substance 2 dans l'enceinte.

Bien que cela n'apparaisse pas sur le dessin, l'axe L longitudinal de l'enceinte 3 est avantageusement, mais non limitativement vertical.

L'organe 10 rotatif consiste avantageusement, mais non limitativement en une vis à un filet.

L'organe 10 rotatif de mise en circulation est, à l'une 10A de ses extrémités 10A, 10B solidaire d'un arbre 9 porteur qui, par des moyens 11, 12, est guidé et mu en rotation selon un axe L sensiblement confondu avec celui du conduit 4 tubulaire.

Les moyens 11, 12 de guidage et d'entraînement en rotation sont au moins indirectement solidaires de l'enceinte 3.

Contrairement aux dispositifs connus, de manière remarquable, le moyen 11 de guidage en rotation de l'arbre 9 porteur est situé du coté de celle 3A des extrémités 3A, 3B de l'enceinte 3 au niveau de laquelle s'effectue le passage de la substance 2 du canal 5 tubulaire dans le canal 6 annulaire.

L'homme de l'art est à même de déterminer la nature exacte du moyen 11 de guidage, mais avantageusement ce moyen comprend au moins un roulement à billes.

Le moyen 12 moteur comprend avantageusement un moteur électrique à vitesse de rotation ajustable tel un moteur commandé via un variateur de fréquence (non représentés).

L'enceinte 3 est, à l'une 3A de ses extrémités 3A, 3B et par un moyen 13 d'appui et de fixation, au moins indirectement reliée à un bâti 14.

De manière notable :
- l'enceinte 3 est constituée par une paroi 3 affectant sensiblement une forme de cloche cylindrique,
- dans l'une 3B des faces extrêmes 3A, 3B de la cavité 3C de cette cloche, débouche la conduite 7 destinée à l'introduction de la substance 2 dans la cavité 3C, et ce, sensiblement axialement au conduit 4 tubulaire et en vis à vis de l'extrémité 10B libre de l'organe 10 rotatif,
- dans l'autre 3A de ses faces extrêmes 3A, 3B, est aménagée une découpe 3E de section au moins suffisante pour autoriser l'engagement axial du conduit 4 tubulaire et, autour de cette découpe, s'étend au moins une portée 3F, 3G, 3H de révolution d'appui et de centrage de l'enceinte sur au moins une portée 15F, 15G, 15H complémentaire, au moins indirectement présentée par le bâti 14.

Ainsi conçu, le dispositif 1 est particulièrement rigide et, de ce fait, il admet, sans vibrer, que l'organe rotatif soit entraîné à grande vitesse.

Cela permet notamment de réduire la durée des cycles de traitement de la substance, d'accroître le brassage de la substance pour une même durée de cycle que la durée traditionnelle.

Ce type de construction permet également de simplifier la fabrication du dispositif et, ultérieurement, de faciliter son entretien.

De préférence, autour de la découpe 3E s'étendent trois portées 3F, 3G, 3H de révolution, dont une portée 3F de centrage, une portée 3G d'appui axial et une portée 3H d'appui étanche.

De manière notable, le conduit 4 tubulaire est, à son extrémité 4A la plus proche de la découpe 3E de l'enceinte 3, au moins indirectement solidaire d'une pièce 15, dite interface,
- qui comprend, d'une part, au moins une portée 15F, 15G, 15H de révolution, d'appui et de centrage destinée à coopérer avec au moins une portée complémentaire 3F, 3G, 3H présentée par la paroi de l'enceinte 3 et, d'autre part, au moins une portée 15I, 15J, 15K de révolution, d'appui et de centrage destinée à coopérer avec au moins une portée 14I, 14J, 14K complémentaire présentée par le bâti 14,
- dans laquelle est aménagée une chambre 16 qui, quant à elle dite de collecte de la substance 2 brassée dans l'enceinte,
   . s'ouvre dans une conduite 17 d'évacuation de la substance 2 issue de l'enceinte,
   . est axialement traversée par l'arbre porteur 9,
   . présente une paroi 15P qui s'étend sur toute la section transversale de la découpe 3E de l'enceinte 3 et dans laquelle sont réservés, d'une part, au moins un orifice 15Q débouchant dans une conduite 8 d'extraction de la substance 2 et, d'autre part, un alésage 15R cylindrique de révolution, traversé au moins par l'arbre 9 porteur.

De manière remarquable, la pièce 15 interface est constituée par une paroi 15 affectant sensiblement une forme de cloche cylindrique notablement aplatie.

Cela lui confère une grande résistance mécanique.

De manière notable, au niveau de l'alésage 15R réservé dans la pièce 15 interface pour le passage de l'arbre 9 porteur, d'une part, ledit arbre 9 présente au moins indirectement en regard de la face 15R cylindrique de l'alésage 15R, une face 19R cylindrique de révolution et, d'autre part, le diamètre de l'alésage 15R et de la face 19R en vis à vis sont fixés pour déterminer entre elles un jeu suffisant pour permettre la libre rotation de l'arbre, mais insuffisant pour autoriser une fuite notable de substance 2.

De manière remarquable, au niveau de sa partie équipée d'au moins une portée 15I, 15J, 15K de révolution, d'appui et de centrage destinée à coopérer avec au moins une portée 14I, 14J, 14K complémentaire présentée par le bâti 14, la pièce 15 interface présente une découpe 15S de section sensiblement identique à celle transversale de la chambre 16 de collecte.

De manière remarquable, d'une part, la pièce 15 interface présente deux groupes opposés de trois portées de révolution (15F, 15G, 15H) et (15I, 15J, 15K), dont deux portées 15F, 15I de centrage, deux portées 15G, 15J d'appui axial, deux portées 15H, 15K d'appui étanche et, d'autre part, ces portées 15F à 15J de révolution sont sensiblement coaxiales.

L'homme de l'art est à même de déterminer la nature des portées (15F, 15G, 15H) et (15I, 15J, 15K) précitées mais, avantageusement :
- les portées 15F, 15I de centrage axial sont des surfaces avantageusement situées cylindriques de révolution qui sont coaxiales,
- les portées 15G, 15J d'appui axial sont des surfaces avantageusement situées dans un plan orthogonal à l'axe L longitudinal de l'enceinte 3,
- les portées 15H, 15K d'étanchéité sont des surfaces avantageusement situées dans un plan orthogonal à l'axe L longitudinal de l'enceinte 3.

Les formes et positions des portées 14I, 14J, 14 K du bâti 14 et 3F, 3G, 3H de l'enceinte 3 avec lesquelles la pièce 15 interface doit coopérer sont induites par celles de ses portées (15F, 15G, 15H) et (15I, 15J, 15K).

De manière également remarquable, le moyen 13 d'appui et de fixation de l'enceinte 3 sur le bâti 14 comprend, d'une part, la pièce interface 15 et, d'autre part, des organes (non représentés) d'application énergique de la portée d'appui axial de l'enceinte 3 contre celle complémentaire la pièce 15 interface et, ce faisant, des portées complémentaires d'appui axial de la dite pièce 15 interface et du bâti 14.

Les organes d'application énergique consistent avantageusement en des tirants qui s'étendent à la périphérie de la pièce 15 interface et présentent chacun deux extrémités dont, d'une part, une extrémité articulée sur le bâti 14 dans un plan comprenant l'axe L longitudinal de l'enceinte et, d'autre part, une extrémité opposée filetée destinée à recevoir un écrou quant à lui destiné à trouver appui sur une portée prévue à cette effet sur l'enceinte 3.

De manière remarquable :
- le moyen 11 de guidage en rotation de l'arbre 9 porteur est porté par le bâti 14,
- un moyen 18 d'étanchéité tournant se trouve disposé entre, d'une part, la partie de l'arbre 9 située dans la chambre 16 de collecte et, d'autre part, le bâti 14.

Bien que cela n'apparaisse pas au dessin, le dispositif 1 de brassage selon l'invention met en oeuvre une pluralité de conduites 8 d'extraction qui sont disposées autour du conduit 4 tubulaire.

De manière remarquable, les conduites 8 d'extraction, d'une part, présentent chacune une extrémité 8A solidaire de la pièce 15 interface et sont chacune sensiblement tangentes à la face 4C externe du conduit 4 tubulaire et, d'autre part, sont associées au conduit 4 tubulaire, de manière à porter l'extrémité 4B de ce conduit 4 tubulaire par laquelle l'organe 10 rotatif extrait la substance 2 du canal 5 axial, dans un plan déterminé P2 situé entre les faces 3A, 3B extrêmes de l'enceinte.

L'homme de l'art est à même de déterminer la position du plan P2 d'extrémité 4A du conduit 4 tubulaire.

Tel que cela apparait au dessin, le dispositif 1 comprend un moyen 19 de travail mécanique de la substance 2, notamment par cisaillement, lors de son passage du canal 5 axial dans le canal 6 annulaire.

Ce moyen 19 de travail mécanique comprend deux pièces coopérantes dont, d'une part, au moins une pièce 20 associée à celle 4A des extrémités 4A, 4B du conduit 4 tubulaire au niveau de laquelle l'organe rotatif 10 extrait la substance 2 du canal 5 axial pour la chasser dans le canal 6 annulaire et, d'autre part, au moins une pièce 21 associée à l'arbre 9 porteur.

Classiquement, les pièces 20, 21 du moyen 19 de travail mécanique de la substance consistent en des parties tubulaires coaxiales dans lesquelles sont découpées des fenêtres qui, lorsqu'elles sont en coïncidence, permettent le passage d'un flux de substance du canal 5 axial dans le canal 6 annulaire et, lorsque cette coïncidence disparaît, induisent le cisaillement du flux de substance 2.

De manière remarquable :
- pour être assemblé à l'arbre 9 porteur, l'organe 10 rotatif présente, d'une part, une partie 10D filetée destinée à coopérer avec un alésage 9D taraudé, axialement réalisé dans l'arbre 9 porteur et, d'autre part, une surface 10E d'appui axial au moins indirect contre une butée 9E, 21E axiale dudit arbre, telle une face 9E terminale de cet arbre,
- celle 21 des pièces 20, 21 du moyen 19 de travail mécanique de la substance qui est associée à l'arbre 9 porteur comprend une platine 21P,
   . dont l'épaisseur est déterminée par deux faces opposées 21A, 21E dont, une face 21A d'appui sur la butée 9E axiale de l'arbre 9 et, une face 21E pour l'appui axial de l'organe 10 rotatif,
   . perforée en son centre d'un alésage 21D de passage de la partie 10D taraudée de l'organe 10 rotatif,
   . équipée d'organes 23 de liaison démontable à l'arbre 9 porteur, tel des vis, dont les têtes 23F sont logées dans des lamages réalisés depuis la face 21E recevant l'organe 10 rotatif en appui axial.

L'homme de l'art est à même de choisir le sens de l'hélice des parties filetée et taraudée permettant l'assemblage de l'organe 10 rotatif et de l'arbre 9 porteur en fonction de leur sens de rotation de fonctionnement.

Ces particularités techniques, représentées dans la demi vue supérieure du dessin, permettent que celle 21 des pièces 20, 21 du moyen 19 de travail mécanique qui est associée à l'arbre 9 porteur puisse être démontée.

Avantageusement, la pièce 21 du moyen 19 de travail mécanique qui est associée à l'arbre 9 porteur est équipée d'une pluralité de couteaux 21H qui présentent chacun au moins une arête de coupe 21J située dans sur une enveloppe conique sensiblement coaxiale au canal 5 tubulaire.

Cette particularité technique, représentée dans la demi vue inférieure du dessin, permet d'assurer la coupure de fibres comprises dans la substance 2, lors de leur sortie du canal 5 axial.

La présence de ces couteaux réduit notablement le risque de colmatage du dispositif de brassage par des fibres.

Le moyen 18 d'étanchéité tournant disposé entre, d'une part, la partie de l'arbre 9 située dans la chambre 16 de collecte et, d'autre part, le bâti 14 :
- comprend deux couronnes 24, 25 dont une est au moins indirectement solidaire du bâti 14 et l'autre est au moins indirectement solidaire de l'arbre porteur 9 et qui,
   . coopèrent par des faces situées dans un plan P3 orthogonal à l'axe L de rotation de l'arbre 9,
   . ferment une cavité 26, sensiblement coaxiale à la chambre 16 de collecte, dans laquelle circule un fluide caloporteur (non représenté), en vue du refroidissement desdites garnitures 24, 25.

Le fluide caloporteur est dirigé dans la cavité 26 par des canaux 26A, 26B.

De manière remarquable, dans sa partie située dans la chambre 16 de collecte de la substance 2 issue de conduites 8 d'extraction, l'arbre 9 porteur présente une pluralité d'ailettes 27 qui s'étendent radialement à sa périphérie.

Ces ailettes 27 centrifugent la substance 2 et permettent d'en faciliter l'évacuation de la chambre 16 de collecte.

Bien que cela n'apparaisse pas sur le dessin, le respect des caractéristiques techniques précitées permet à l'homme de l'art de construire un dispositif de brassage dont le rapport longueur sur diamètre de l'organe 10 rotatif est notablement élevé sans qu'il y ait lieu de craindre l'apparition d'une vitesse de rotation critique dans la plage de fonctionnement du dispositif.

Le fonctionnement du dispositif est silencieux puisqu'il s'effectue sans vibration.

Dans une forme préférée de réalisation, d'une part, l'axe longitudinal "L" de la cavité 3C cylindrique de l'enceinte tubulaire est sensiblement vertical et, d'autre part, ladite enceinte 3 tubulaire est orientée de manière telle que sa conduite 7 d'entrée est située à sa partie basse.

Le bâti 14 est supporté par une structure (non représentée) susceptible de prendre appui sur un support horizontal (également non représenté), de manière que l'enceinte 3 se trouve suspendue à une hauteur telle dudit support horizontal, qu'entre ce support et la partie basse de l'enceinte subsiste une hauteur libre au moins égale à la dimension longitudinale de cette enceinte.

Ces dernières caractéristiques permettent le démontage et le montage aisés du dispositif.

De préférence, le conduit tubulaire 4 est de section circulaire.

Dans une forme préférée de réalisation, le conduit tubulaire 4 comprend, en saillie sur sa face interne, au moins une arête longitudinale.

Une telle arête permet de freiner la rotation de la substance dans le conduit et d'exercer un effet de couteau sur la dite substance.

De préférence, le conduit tubulaire 4 comporte deux arêtes longitudinales qui sont diamétralement opposées.

Dans une forme préférée de réalisation, le conduit tubulaire 4 apparaît constitué par assemblage selon un plan médian contenant l'axe longitudinal L du conduit, de deux demi-conduits tubulaires dont les axes longitudinaux sont situés de part et d'autre du dit axe longitudinal du conduit.

Ces particularités techniques permettent de construire un dispositif de brassage présentant les deux arêtes longitudinales recherchées.

## Revendications

1. Dispositif (1) de brassage d'une substance (2), notamment en vue de son malaxage, lequel dispositif (1) comprend essentiellement :
- une enceinte (3) tubulaire de révolution qui définit une cavité (3C) cylindrique d'axe longitudinal (L), délimitée par des faces extrêmes (3A, 3B) opposées et une face latérale (3D) de longueur et de diamètre déterminés,
- axialement disposé dans la cavité (3), un conduit (4) tubulaire de révolution dont la paroi (4), de diamètre externe et longueur moindres que celles de la face (3D) latérale de cavité (3C), définit un canal (5) axial et un canal (6) annulaire qui communiquent par leurs extrémités communes (5A, 6A et 5B, 6B),
- un organe (10) rotatif de mise en circulation de la substance (2) contenue dans le conduit (4) tubulaire, de manière à, d'une part, par une extrémité (4A) dudit conduit (4) tubulaire, la chasser dans le canal (6) annulaire et, d'autre part, par l'autre extrémité (4B) dudit conduit (4) tubulaire, l'aspirer dans ce canal (6) annulaire, et par cela assurer la circulation "en boucle" et le brassage recherché pour la substance (2),
- cet organe (10) rotatif étant, à l'une (10A) de ses extrémités (10A, 10B) solidaire d'un arbre (9) porteur qui, par des moyens (11, 12), est guidé et mu en rotation selon un axe (L) sensiblement confondu avec celui du conduit (4) tubulaire,
- le moyen (11) de guidage en rotation de l'arbre (9) porteur étant situé du coté de celle (3A) des extrémités (3A, 3B) de l'enceinte (3) au niveau de laquelle s'effectue le passage de la substance (2) du canal (5) tubulaire dans le canal (6) annulaire,
- dans l'une des faces extrêmes (3A, 3B) de la cavité (3C), au moins une conduite (7) qui, dite d'admission, est destinée à l'introduction de la substance (2) dans la cavité (3C) et débouche sensiblement axialement au conduit (4) tubulaire et en vis à vis de l'extrémité (10B) libre de l'organe (10) rotatif,
- dans l'autre (3A) des faces extrêmes (3A, 3B) de la cavité (3C), est aménagée une découpe (3E) de section au moins suffisante pour autoriser l'engagement axial du conduit (4) tubulaire et, autour de cette découpe, s'étend au moins une portée (3F, 3G, 3H) de révolution d'appui et de centrage de l'enceinte sur au moins une portée (15F, 15G, 15H) complémentaire, au moins indirectement présentée par le bâti (14),
- au moins une conduite (8) destinée à l'extraction de la substance de l'enceinte (3) et disposée pour engendrer le prélèvement de la dite substance (2), dans le canal (6) annulaire, sensiblement au niveau de la face (4C) externe du conduit (4) tubulaire et dans un plan (P1) déterminé situé entre les extrémités (4A, 4B) de ce conduit,
ce dispositif étant **CARACTERISE** en ce que le conduit (4) tubulaire est, à son extrémité (4A) la plus proche de la découpe (3E) de l'enceinte (3), au moins indirectement solidaire d'une pièce (15), dite interface,
- qui comprend, d'une part, au moins une portée (15F, 15G, 15H) de révolution, d'appui et de centrage destinée à coopérer avec au moins une portée complémentaire (3F, 3G, 3H) présentée par la paroi de l'enceinte (3) et, d'autre part, au moins une portée (15I, 15J, 15K) de révolution, d'appui et de centrage destinée à coopérer avec au moins une portée (14I, 14J, 14K) complémentaire présentée par le bâti (14),
- dans laquelle est aménagée une chambre (16) qui, quant à elle dite de collecte de la substance (2) brassée dans l'enceinte,
. s'ouvre dans une conduite (17) d'évacuation de la substance (2) issue de l'enceinte,
. est axialement traversée par l'arbre porteur (9),
. présente une paroi (15P) qui s'étend sur toute la section transversale de la découpe (3E) de l'enceinte (3) et dans laquelle sont réservés, d'une part, au moins un orifice (15Q) débouchant dans une conduite (8) d'extraction de la substance (2) et, d'autre part, un alésage (15R) cylindrique de révolution, traversé au moins par l'arbre (9) porteur.

2. Dispositif selon la revendication 1 **caractérisé** en ce que, au niveau de l'alésage (15R) réservé dans la pièce (15) interface pour le passage de l'arbre (9) porteur, d'une part, ledit arbre (9) présente au moins indirectement en regard de la face (15R) cylindrique de l'alésage (15R), une face (19R) cylindrique de révolution et, d'autre part, le diamètre de l'alésage (15R) et de la face (19R) en vis à vis sont fixés pour déterminer entre elles un jeu suffisant pour permettre la libre rotation de l'arbre, mais insuffisant pour autoriser une fuite notable de substance (2).

3. Dispositif selon la revendication 1 ou 2 **caractérisé** en ce que, au niveau de sa partie équipée d'au moins une portée (15I, 15J, 15K) de révolution, d'appui et de centrage destinée à coopérer avec au moins une portée (14I, 14J, 14K) complémentaire présentée par le bâti (14), la pièce (15) interface présente une découpe (15S) de section sensiblement identique à celle transversale de la chambre (16) de collecte.

4. Dispositif selon l'une quelconque des revendications 1 à 3 **caractérisé** en ce que :
- il met en oeuvre une pluralité de conduites (8) d'extraction qui sont disposées autour du conduit (4) tubulaire, et
- ces conduites (8) d'extraction, d'une part, présentent chacune une extrémité (8A) solidaire de la pièce (15) interface et sont chacune sensiblement tangentes à la face (4C) externe du conduit (4) tubulaire et, d'autre part, sont associées au conduit (4) tubulaire, de manière à porter l'extrémité (4B) de ce conduit (4) tubulaire par laquelle l'organe (10) rotatif extrait la substance (2) du canal (5) axial, dans un plan déterminé (P2) situé entre les faces (3A, 3B) extrêmes de l'enceinte.

5. Dispositif selon l'une quelconque des revendications 1 à 4 et mettant en oeuvre un moyen (19) de travail mécanique qui comprend deux pièces coopérantes dont, d'une part, au moins une pièce (20) associée à celle (4A) des extrémités (4A, 4B) du conduit (4) tubulaire au niveau de laquelle l'organe rotatif (10) extrait la substance (2) du canal (5) axial pour la chasser dans le canal (6) annulaire et, d'autre part, au moins une pièce (21) associée à l'arbre (9) porteur, ce dispositif étant **caractérisé** en ce que :
- pour être assemblé à l'arbre (9) porteur, l'organe (10) rotatif présente, d'une part, une partie (10D) filetée destinée à coopérer avec un alésage (9D) taraudé, axialement réalisé dans l'arbre (9) porteur et, d'autre part, une surface (10E) d'appui axial au moins indirect contre une butée (9E, 21E) axiale dudit arbre, telle une face (9E) terminale de cet arbre,
- celle (21) des pièces (20, 21) du moyen (19) de travail mécanique de la substance qui est associée à l'arbre (9) porteur comprend une platine (21P),
. dont l'épaisseur est déterminée par deux faces opposées (21A, 21E) dont, une face (21A) d'appui sur la butée (9E) axiale de l'arbre (9) et, une face (21E) pour l'appui axial de l'organe (10) rotatif,
. perforée en son centre d'un alésage (21D) de passage de la partie (10D) taraudée de l'organe (10) rotatif,
. équipée d'organes (23) de liaison démontable à l'arbre (9) porteur, tel des vis, dont les têtes (23F) sont logées dans des lamages réalisés depuis la face (21E) recevant l'organe (10) rotatif en appui axial.

6. Dispositif selon l'une quelconque des revendications 1 à 5 **caractérisé** en ce que :
- le moyen (11) de guidage en rotation de l'arbre 9 porteur est porté par le bâti (14) et un moyen (18) d'étanchéité tournant se trouve disposé entre, d'une part, la partie de l'arbre (9) située dans la chambre (16) de collecte et, d'autre part, le bâti (14),
- le moyen (18) d'étanchéité tournant disposé entre, d'une part, la partie de l'arbre (9) située dans la chambre (16) de collecte et, d'autre part, le bâti (14),
. comprend deux couronnes (24, 25) dont une est au moins indirectement solidaire du bâti (14) et l'autre est au moins indirectement solidaire de l'arbre porteur (9) et qui,
.. coopèrent par des faces situées dans un plan (P3) orthogonal à l'axe (L) de rotation de l'arbre (9),
.. ferment une cavité (26), sensiblement coaxiale à la chambre (16) de collecte, dans laquelle circule un fluide caloporteur (non représenté), en vue du refroidissement desdites garnitures (24, 25).

7. Dispositif selon l'une quelconque des revendications 1 à 6 **caractérisé** en ce que, dans sa partie située dans la chambre (16) de collecte de la substance (2) issue de conduites (8) d'extraction, l'arbre (9) porteur présente une pluralité d'ailettes (27) qui s'étendent radialement à sa périphérie.

8. Dispositif selon l'une quelconque des revendications 1 à 7 **caractérisé** en ce que le bâti (14) est supporté par une structure susceptible de prendre appui sur un support horizontal de manière que l'enceinte (3) se trouve suspendue à une hauteur telle du dit support horizontal, qu'entre ce support et la partie basse de l'enceinte susbiste une hauteur libre au moins égale à la dimension longitudinale de cette enceinte.

9. Dispositif selon l'une quelconque des revendications 1 à 8 **caractérisé** en ce que :
- d'une part, la pièce (15) interface présente deux groupes opposés de trois portées de révolution (15F, 15G, 15H) et (15I, 15J, 15K) dont deux portées (15F, 15I) de centrage, deux portées (15G, 15J) d'appui axial, deux portées (15H, 15K) d'appui étanche et, d'autre part, ces portées (15F à 15J) de révolution sont sensiblement coaxiales,
- les portées (15F, 15I) de centrage axial sont des surfaces avantageusement situées cylindriques de révolution qui sont coaxiales,
- les portées (15G, 15J) d'appui axial sont des surfaces avantageusement situées dans un plan orthogonal à l'axe (L) longitudinal de l'enceinte (3),
- les portées (15H, 15K) d'étanchéité sont des surfaces avantageusement situées dans un plan orthogonal à l'axe (L) longitudinal de l'enceinte (3).

10. Dispositif selon l'une quelconque des revendications 1 à 9 dans lequel l'enceinte (3) est, à l'une (3A) de ses extrémités (3A, 3B) et par un moyen (13) d'appui et de fixation au moins indirectement reliée à un bâti (14), **caractérisé** en ce que :
- le moyen (13) d'appui et de fixation de l'enceinte (3) sur le bâti (14) comprend, d'une part, la pièce interface (15) et, d'autre part, des organes d'application énergique de la portée d'appui d'axial de l'enceinte (3) contre celle complémentaire de la pièce interface (15) et , ce faisant, des portées complémentaires d'appui axial de la pièce interface (15) et du bâti (14), et
- les organes d'application énergique consistent en des tirants qui s'étendent à la périphérie de la pièce (15) interface et présentent chacun deux extrémités dont, d'une part, une extrémité articulée sur le bâti (14) dans un plan comprenant l'axe (L) longitudinal de l'enceinte et, d'autre part, une extrémité opposée filetée destinée à recevoir un écrou quant à lui destiné à trouver appui sur une portée prévue à cet effet sur l'enceinte (3).
